# EUROPEAN PATENT APPLICATION

(11) **EP 2 854 023 A1**
(43) Date of publication of application: **01.04.2015**
(21) Application number: 14185556.9
(22) Date of filing: 19.09.2014
(51) Int. Cl.: G06F 3/12

(54) **Parameter setting assisting system, parameter setting assisting method, and program**

(30) Priority: 30.09.2013 JP 2013204185
(71) Applicant: Fujifilm Corporation, Minato-ku Tokyo 106-8620 (JP)
(72) Inventor: Kuranoshita, Masashi, Tokyo, 107-0052 (JP)
(74) Representative: Klunker . Schmitt-Nilson . Hirsch

(57) **Abstract**

A statistical process is performed on a plurality of differential data between a collection of finalized values of parameters, which have been set a plurality of times in the past (finalized value data 64), and a collection of initial values represented by a data template (62). In addition, a result image (164 through 166, 184, and 186), which indicates the results of the statistical process, is generated. In a case where a user interface (60) calls up a new data template (62) and displays a collection of initial values therefor, the user interface (60) simultaneously displays the result image (164 through 166, 184, and 186).

## Description

### BACKGROUND OF THE INVENTION

### Field of the Invention:

The present invention relates to a parameter setting assisting system, a parameter setting assisting method, and a non-transitory storage medium (program) for assisting in setting parameters for printing.

### Description of the Related Art:

Recently, in the printing field, printing workflows have been digitized overall due to the widespread use of DTP (DeskTop Publishing) and CTP (Computer To Plate) technologies. Since the number of combinations of parameter types and options of parameters available for printing is vast, it is highly tedious and time consuming to set all of the parameters each time that a print job to be performed is generated. Various processes have been proposed in the art for storing sets of typical values of parameters as data templates, and to call up and use data templates that are suitable for given print jobs.

Japanese Laid-Open Patent Publication No. 2003-216362 discloses a process in which, on the condition that initial settings and present settings differ from each other, then details and items of the differences are extracted and displayed together on a single setting screen.

According to the process disclosed in Japanese Laid-Open Patent Publication No. 2011-118817, on the condition that a default printing condition is changed, the user is asked to enter reasons for the change, and the changed printing condition and the reasons therefor are stored and managed as log data.

### SUMMARY OF THE INVENTION

In a case where data templates are used, there are parameters having initial values that are used highly frequently as is, and other parameters having initial values that are very frequently changed. However, it is difficult for the processes disclosed in Japanese Laid-Open Patent Publication No. 2003-216362 and Japanese Laid-Open Patent Publication No. 2011-118817 to grasp such a tendency of the parameters. Therefore, each time a new print job is to be generated, it is necessary to find the locations at which the parameters that are very frequently changed are set, and to change the settings for such parameters. Such a procedure has been both tedious and time consuming.

The present invention has been made in view of the aforementioned problems. An object of the present invention is to provide a parameter setting assisting system, a parameter setting assisting method, and a non-transitory storage medium (program), which are capable of presenting particularly useful information to the operator in the case that parameter settings are to be corrected based on data templates that have been called up beforehand.

According to the present invention, a parameter setting assisting system is provided, comprising a template acquirer for acquiring a data template that represents a collection of initial values of parameters concerning printing, a user interface for calling up the data template acquired by the template acquirer and displaying the collection of initial values, and for varying the values of the parameters, a differential statistics processor for performing a statistical process on a plurality of differential data between a collection of finalized values of the parameters, which have been set a plurality of times in past through the user interface, and the collection of initial values represented by the data template, and a result image generator for generating a result image indicating the results of the statistical process performed by the differential statistics processor, wherein, in a case where a new data template is called up and a collection of initial values of parameters therefor is displayed, the user interface simultaneously displays the result image generated by the result image generator.

Since the statistical process is performed on the differential data between a collection of finalized values of the parameters, which have been set a plurality of times in the past, and the collection of initial values represented by the data template, and the result image indicating the results of the statistical process is generated, by observing the result image that represents a statistical quantity of the differences (changes) between the parameters, the operator of the parameter setting assisting system can easily recognize the tendency of the parameters that have been set a plurality of times in the past. Therefore, the operator is presented with particularly useful information at the time that the parameter settings are corrected based on the data template that has been called up beforehand.

Preferably, in response to an action of pointing to the result image, the user interface calls up and displays user controls for changing the values of the parameters that are processed by the statistical process.

Preferably, the user interface displays the result image simultaneously with user controls for changing the values of the parameters that are processed by the statistical process.

Preferably, the result image generator generates the result image, which is represented by a histogram or a bar graph, for each of the parameters.

Preferably, the result image generator generates the result image, which is represented by a plurality of parameters sorted in a descending or an ascending order of frequencies, at which the finalized values differ from the initial values.

According to the present invention, there also is provided a parameter setting assisting method to be carried out by a system having a user interface for varying values of parameters concerning printing, comprising the steps of acquiring a data template that represents a collection of initial values of the parameters, calling up the acquired data template and displaying the collection of initial values on the user interface, performing a statistical process on a plurality of differential data between a collection of finalized values of the parameters, which have been set a plurality of times in past, and the collection of initial values represented by the data template, and generating a result image indicating the results of the statistical process, wherein, in a case where a new data template is called up and a collection of initial values of parameters therefor is displayed, the step of displaying the collection of initial values further comprises simultaneously displaying the generated result image.

According to the present invention, there further is provided a non-transitory storage medium for storing a program to be executed by a system having a user interface for varying values of parameters concerning printing, the program enabling the system to carry out the steps of acquiring a data template that represents a collection of initial values of the parameters, calling up the acquired data template and displaying the collection of initial values on the user interface, performing a statistical process on a plurality of differential data between a collection of finalized values of the parameters, which have been set a plurality of times in past, and the collection of initial values represented by the data template, and generating a result image indicating the results of the statistical process, wherein, in a case where a new data template is called up and a collection of initial values of parameters therefor is displayed, the step of displaying the collection of initial values further comprises simultaneously displaying the generated result image.

The parameter setting assisting program according to the present invention enables a system having a user interface for varying values of parameters concerning printing to carry out the steps of acquiring a data template that represents a collection of initial values of the parameters, calling up the acquired data template and displaying the collection of initial values on the user interface, performing a statistical process on a plurality of differential data between a collection of finalized values of the parameters, which have been set a plurality of times in past, and the collection of initial values represented by the data template, and generating a result image indicating the results of the statistical process, wherein, in a case where a new data template is called up and a collection of initial values of parameters therefor is displayed, the step of displaying the collection of initial values further comprises simultaneously displaying the generated result image.

With the parameter setting assisting system, the parameter setting assisting method, and the non-transitory storage medium (program) according to the present invention, since the statistical process is performed on the differential data between a collection of finalized values of the parameters, which have been set a plurality of times in the past, and the collection of initial values represented by the data template, and the result image indicating the results of the statistical process is generated, by observing the result image that represents a statistical quantity of the differences (changes) between the parameters, the operator of the parameter setting assisting system can easily recognize the tendency of the parameters that have been set a plurality of times in the past. Therefore, the operator is presented with particularly useful information at the time that the parameter settings are corrected based on the data template that has been called up beforehand.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a block diagram of a print production system incorporating a parameter setting assisting system according to a first embodiment of the present invention;
FIG. 2 is an electric block diagram of a working terminal shown in FIG. 1;
FIG. 3 is an electric block diagram of a server shown in FIG. 1;
FIG. 4 is a flowchart of an operation sequence of the parameter setting assisting system shown in FIG. 1;
FIG. 5 is an image diagram showing an editing screen for editing a print job;
FIG. 6 is a first image diagram showing a setting screen for setting parameters;
FIG. 7 is a second image diagram showing a setting screen for setting parameters;
FIG. 8 is a diagram showing an example of initial values and finalized values of parameters;
FIG. 9 is a block diagram illustrating a manner in which a differential statistics processor shown in FIG. 3 operates;
FIG. 10 is a front elevational view of a window in a first display example;
FIG. 11 is a front elevational view of a window in a second display example;
FIG. 12 is a block diagram of a print production system incorporating a parameter setting assisting system according to a second embodiment of the present invention;
FIG. 13 is an electric block diagram of a server shown in FIG. 12; and
FIG. 14 is a flowchart of an operation sequence of the parameter setting assisting system shown in FIG. 12.

### DESCRIPTION OF THE PREFERRED EMBODIMENTS

Parameter setting assisting methods according to preferred embodiments of the present invention, in relation to parameter setting assisting systems and parameter setting assisting programs for carrying out the parameter setting assisting methods, will be described in detail below with reference to the accompanying drawings.

### <First Embodiment>

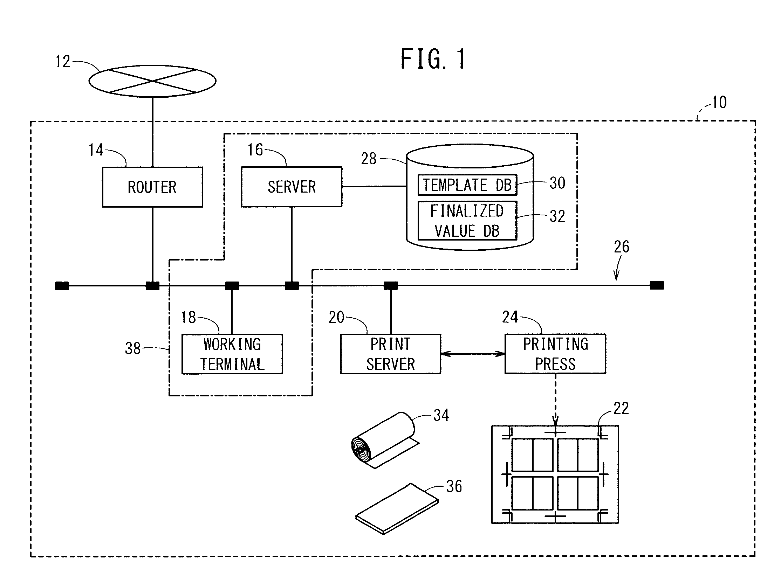

A parameter setting assisting system according to a first embodiment of the present invention will be described below with reference to FIGS. 1 through 11.

### [Overall Configuration of Print Production System 10]

FIG. 1 shows in block form an overall configuration of a print production system 10 incorporating a parameter setting assisting system 38 according to a first embodiment of the present invention.

As shown in FIG. 1, the print production system 10 includes a router 14 serving as a device for enabling connection to a network 12, a server 16, which is accessible through the network 12 from non-illustrated terminal devices that belong to external networks, a working terminal 18 for performing various information processing steps on content data that are acquired from the server 16, etc., a print server 20 having a function to carry out a printing process, and a printing press 24 for producing a print 22 based on output data sent from the print server 20.

In the print production system 10, the server 16 is an apparatus that plays a central role in workflow management. The server 16 is connected to the working terminal 18 and the print server 20 for communicating therewith through a LAN (Local Area Network) 26 that is set up in the print production system 10. The server 16 may be connected to various terminal devices of designers and/or production companies (not shown) for communicating therewith through the router 14 and the network 12.

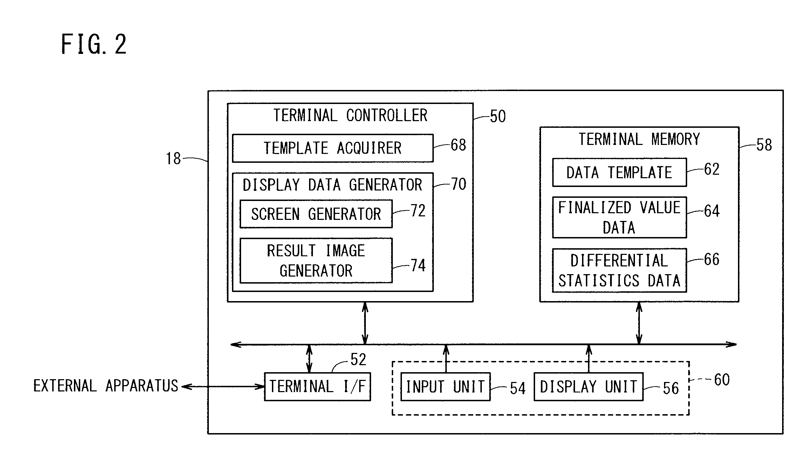

A storage device 28, which is capable of storing various data concerning workflow, is connected to the server 16. The storage device 28 stores content data, data to be output (hereinafter referred to as "output data"), e.g., platemaking data, printing plate data, or proof data files, job ticket files, e.g., JDF (Job Definition Format) files, color profiles, color sample data files, etc. In FIG. 1, a database 30 of data templates 62 (FIG. 2) (hereinafter referred to as a "template DB 30") and a database 32 of finalized value data 64 (FIG. 2) (hereinafter referred to as a "finalized value DB 32") are set up in the storage device 28.

The working terminal 18 is a device that performs a preflight process on content data representing characters, figures, patterns, photographs, etc., and then generates data per page (page data) from the processed content data. By referring to the tag information of a job ticket, the working terminal 18 also performs an imposing process responsive to a binding process and a page folding process that have been designated.

The print server 20 performs an RIP (Raster Image Processing) process on platemaking data, etc., that have been imposed, and supplies generated output data to the printing press 24.

Based on the output data supplied from the print server 20, the printing press 24 produces a print 22 containing images on a print medium 34. The print medium 34 may comprise a paper medium such as synthetic paper, thick paper, aluminum-evaporated paper, or the like, a resin medium such as vinyl chloride, PET (polyethylene terephthalate), or the like, or tarpaulin paper, a metal sheet, or the like.

On the condition that the printing press 24 comprises a proofer, then the printing press 24 may be constituted by a DDCP (Direct Digital Color Proofing), an inkjet color proofer, a low-resolution color laser printer (electrophotographic printer), an inkjet printer, or the like.

On the condition that the printing press 24 comprises a letterpress printing press, then the printing press 24 produces a print 22, which includes images printed on a print medium 34, by applying inks to the print medium 34 through printing plates 36 and intermediate transfer members, not shown.

On the condition that the printing press 24 comprises a digital printing press, the printing press 24 can directly produce a print 22 without the need for generating printing plates 36. The digital printing press may comprise an inkjet printing press, a wide-format printing press, an inkjet color proofer, a color laser printer, or the like.

The server 16, the working terminal 18, and the storage device 28 jointly make up a parameter setting assisting system 38 for assisting in setting various parameters for printing. Such parameters refer to control variables concerning the production of the print 22, which may include various processes such as a printing process, a sheet folding process, a binding process, a cutting process, and a surface treating process, etc.

In the case of offset printing, the parameters with respect to the color conversion process may include, for example, the printing press 24, the print medium 34, the printing plates 36, inks, a halftone dot type, a resolution, a screen ruling, an angle set, a dot gain curve, a color profile, an overprint, a trapping, etc.

The parameters may include not only data that are directly involved in a printing process, but also data (so-called metadata) ancillary to such data. Examples of metadata include customer names, printing jobs, production types, etc.

### [Electric Setup of Working Terminal 18]

FIG. 2 shows in electric block form the working terminal 18 shown in FIG. 1. As shown in FIG. 2, the working terminal 18 basically comprises a computer having a terminal controller 50, a terminal I/F 52, an input unit 54, a display unit 56, and a terminal memory 58 (storage medium).

The terminal I/F 52 serves as an interface for sending electric signals to and receiving electric signals from an external apparatus. The working terminal 18 can acquire various data, e.g., data templates 62, from the server 16 (FIG. 1) through the terminal I/F 52, and can supply various data, e.g., finalized value data 64, to the server 16 through the terminal I/F 52.

The input unit 54 comprises various input devices including a mouse, a track ball, a keyboard, a touch sensor, etc. The display unit 56 is an output device based on any of various principles, which may comprise a liquid crystal display panel, an organic EL (electroluminescence) display panel, or a cathode-ray tube (CRT). The input function of the input unit 54 and the display function of the display unit 56 are combined with each other, thereby making up a user interface 60 for varying the values of parameters.

The terminal memory 58 stores programs and data required for the terminal controller 50 to control various components of the working terminal 18. In FIG. 2, the terminal memory 58 stores data templates 62, finalized value data 64, and differential statistics data 66.

The terminal memory 58 may comprise a non-transitory computer-readable storage medium. The computer-readable storage medium comprises a portable medium such as a magneto-optic disk, a ROM, a CD-ROM, a flash memory, or the like, or a storage medium such as a hard disk or the like incorporated in a computer system. The storage medium also includes a medium for dynamically holding programs for a short period of time, or a medium for holding programs for a certain period of time.

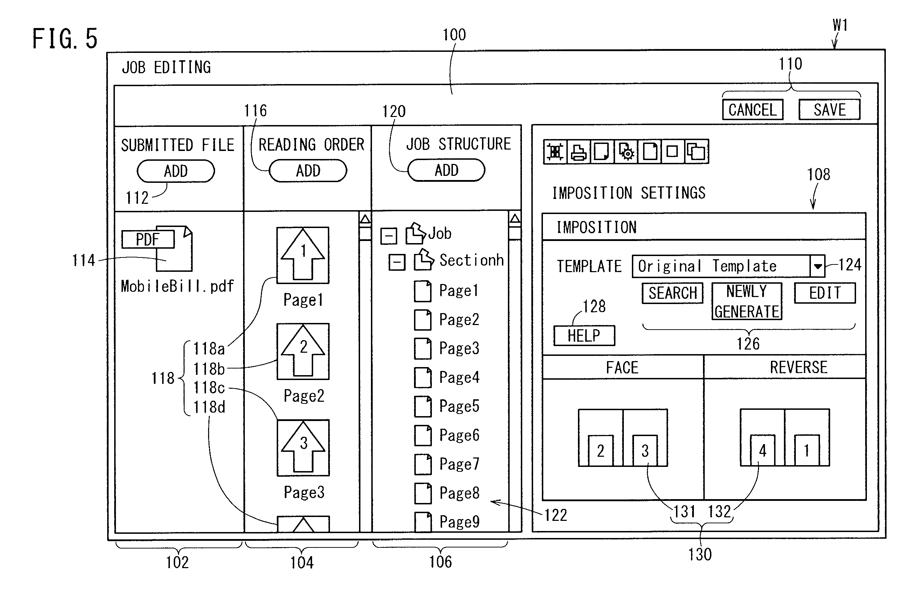

The terminal controller 50 comprises an information processing unit, i.e., a processor, such as a CPU (Central Processing Unit) or the like. The terminal controller 50 reads and executes programs stored in the terminal memory 58, so as to carry out various functions including a template acquirer 68 for acquiring a data template 62 to be called up, and a display data generator 70 (including a screen generator 72 and a result image generator 74) for generating display data for displaying images such as a window W1 (see FIG. 5, etc.).

### [Electric Setup of Server 16]

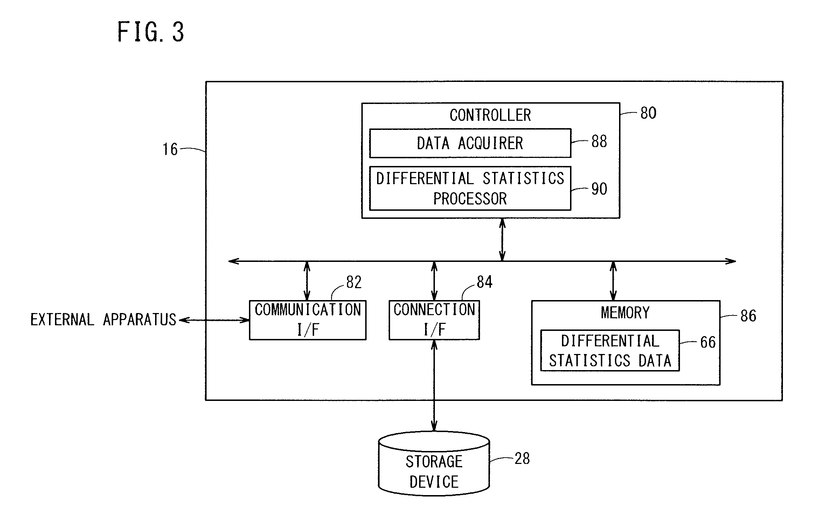

FIG. 3 shows in electric block form the server 16 shown in FIG. 1. As shown in FIG. 3, the server 16 basically comprises a computer having a controller 80, a communication I/F 82, a connection I/F 84, and a memory 86 (storage medium).

The communication I/F 82 serves as an interface for sending electric signals to and receiving electric signals from an external apparatus. The server 16 can acquire various data, e.g., the finalized value data 64 shown in FIG. 2, from the working terminal 18 (FIG. 1) through the communication I/F 82, and can supply various data, e.g., differential statistics data 66, to the working terminal 18 through the communication I/F 82.

The connection I/F 84 serves as an interface for sending data files to and receiving data files from the storage device 28. In response to a request from the server 16, the storage device 28 can selectively supply a data template 62 to be called up together with finalized value data 64, for example, to the server 16 through the connection I/F 84.

The memory 86 stores programs and data required for the controller 80 to control various components of the server 16. In FIG. 3, the memory 86 stores differential statistics data 66. As with the terminal memory 58 (FIG. 2), the memory 86 may comprise a non-transitory computer-readable storage medium.

The controller 80 comprises an information processing unit such as a CPU (Central Processing Unit) or the like. The controller 80 reads and executes programs stored in the memory 86, so as to carry out functions that include a data acquirer 88 for acquiring various data for generating differential data, and a differential statistics processor 90 for performing a statistical process on the differential data.

### [Operations (former part) of Parameter Setting Assisting System 38]

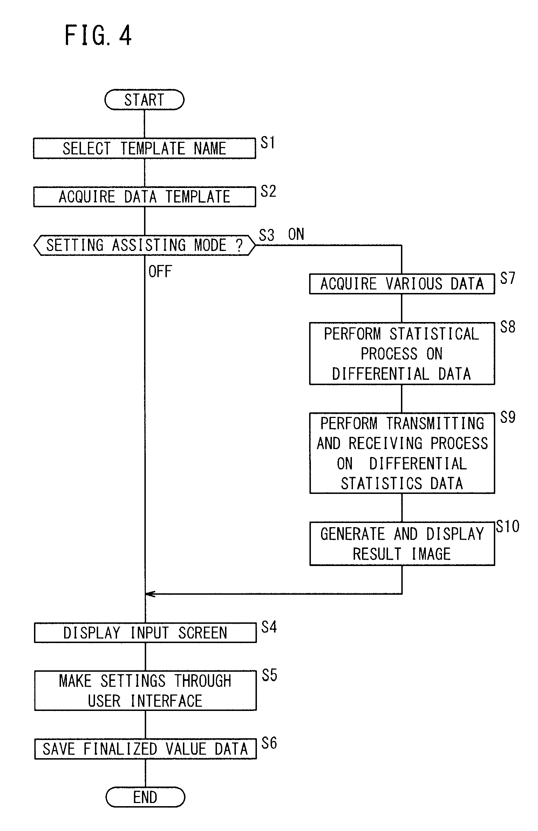

The parameter setting assisting system 38 according to the first embodiment basically is configured as described above. Operations of the working terminal 18 shown in FIG. 2 and the server 16 shown in FIG. 3 will be described in detail below primarily with reference to the flowchart shown in FIG. 4.

Prior to producing prints 22, an operator, who is a user of the print production system 10, generates a print job, or more specifically, a job ticket, which is suitable for each of the prints 22. It is assumed that the operator selects one, which is closest to the manner in which the print job is intended to be carried out, from among a plurality of template names (data templates 62) that are registered in the template DB 30.

A data template 62 represents a collection of initial values of parameters. The initial values or finalized values, to be described later, are of a data format that is not necessarily limited to numerals, but may consist of a string of characters.

In step S1 of FIG. 4, the operator selects a template name to be called up through the user interface 60. More specifically, in response to an instruction to start editing the print job, the screen generator 72 generates display data for an editing screen 100 (see FIG. 5), and supplies the generated display data to the display unit 56. Accordingly, as shown in FIG. 5, the display unit 56 displays a window W1 including the editing screen 100.

The display data that are generated by the screen generator 72 (including the result image generator 74) may include image data that are generated by application software. Alternatively, the display data may represent various parameters that are used by a graphic function of an API (Application Programming Interface) provided by basic software.

As shown in FIG. 5, the editing screen 100 includes a first setting field 102, a second setting field 104, a third setting field 106, a fourth setting field 108, and a button group 110 having buttons marked with "CANCEL" and "SAVE", respectively. The operator operates the input unit 54 (FIG. 2) in order to make various settings in the setting fields.

The first setting field 102 has a button 112 marked with "ADD" in an upper area thereof. In a case where the operator clicks on the "ADD" button 112, a data file to be imposed is added to the first setting field 102. In FIG. 5, an icon 114 representing a data file having a file name of "MobileBill.pdf" is displayed in the first setting field 102.

The second setting field 104 has a button 116 marked with "ADD" in an upper area thereof. In a case where the operator clicks on the "ADD" button 116, a page to be read is added to the second setting field 104. In FIG. 5, four thumbnails 118, i.e., a thumbnail 118a representing a first page, a thumbnail 118b representing a second page, a thumbnail 118c representing a third page, and a thumbnail 118d representing a fourth page, are displayed in descending order in the second setting field 104.

The third setting field 106 has a button 120 marked with "ADD" in an upper area thereof. In a case where the operator clicks on the "ADD" button 120, a section of a job structure is added to the third setting field 106. In FIG. 5, plural pages, which are of the same hierarchical level, are displayed in a hierarchical menu 122 in the third setting field 106.

The fourth setting field 108 has a pull-down menu 124, a button group 126 having buttons marked with "SEARCH", "NEWLY GENERATE", and "EDIT", respectively, a button 128 marked with "HELP", and a double-sided template image 130 having a face image 131 and a reverse image 132. In FIG. 5, the template image 130 schematically represents a two-page double-sided printing pattern having the template name "Original Template".

In step S1, the operator selects one template name using the pull-down menu 124, and then clicks on one of the buttons (particularly, the "EDIT" button) of the button group 126, whereupon control proceeds to the next step S2.

In step S2, the working terminal 18 acquires a data template 62, which is related to the template name selected in step S1. Prior to acquiring the data template 62, the working terminal 18 sends a request signal for requesting a data template 62 having the template name "Original Template" through the terminal I/F 52 to the server 16. The server 16 receives the request signal through the LAN 26 and the communication I/F 82.

Thereafter, the controller 80 reads the data template 62 from the storage device 28 (template DB 30), and sends communication data including the data template 62 to the working terminal 18. As a result, the terminal controller 50 (template acquirer 68) is made capable of acquiring the data template 62 that is related to the template name "Original Template".

In step S3, the terminal controller 50 judges whether a setting assisting mode, to be described later, is in an ON or OFF condition. In a case where the terminal controller 50 determines that the setting assisting mode is OFF (step S3: OFF), control proceeds to the next step S4.

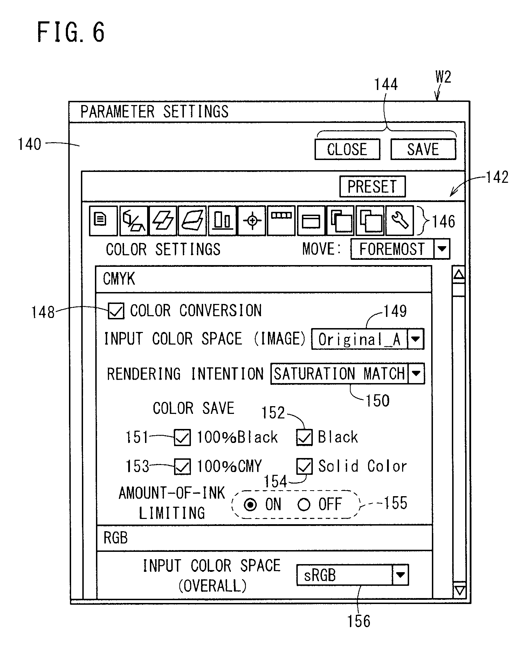

In step S4, the user interface 60 calls up the data template 62 that was acquired in step S2, and displays a collection of initial values of parameters on an input screen 140 (FIG. 6). More specifically, in response to an instruction to start the setting process, the screen generator 72 generates display data for the input screen 140, and supplies the generated display data to the display unit 56. Accordingly, the display unit 56 displays a window W2 including the input screen 140.

As shown in FIG. 6, the input screen 140 includes a variable setting field 142 for setting a plurality of parameters, and a button group 144 having buttons marked with "CLOSE" and "SAVE", respectively. The operator may operate the input unit 54 (FIG. 2) in order to make various settings in the variable setting field 142.

The variable setting field 142 includes an icon group 146 having a plurality of menu icons and a plurality of user controls 148 through 156. The user control 148 is a checkbox for selecting whether a color conversion process is to be performed or not on a CMYK image. In the case shown in FIG. 6, the checkbox is ticked in order to perform the color conversion process. The user control 149 is a pull-down menu for selecting one of the types of input color spaces applicable to the image content. In the case shown in FIG. 6, "Original_A" is selected on the pull-down menu. The user control 150 is a pull-down menu for selecting one of the types of rendering intensions. In the case shown in FIG. 6, "SATURATION MATCH" is selected on the pull-down menu.

The user controls 151 through 154 are checkboxes for selecting whether particular colors are to be saved or not after the color conversion process. In FIG. 6, the checkboxes 151 through 154 are ticked in order to save particular colors. The user control 155 is a pair of radio buttons for selecting whether an amount-of-ink limiting process is turned ON or OFF. In the case shown in FIG. 6, the amount-of-ink limiting process is turned ON. The user control 156 is a control box for selecting one of the types of input color spaces applicable to an overall image. In the case shown in FIG. 6, "sRGB" is selected on the control box.

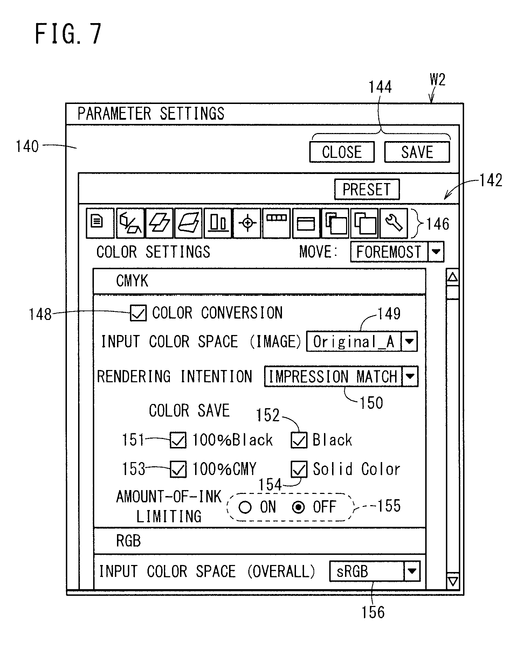

In step S5, the working terminal 18 sets parameters through the user interface 60. For example, in response to an action of the operator via the two user controls 150, 155, the input screen 140 shown in FIG. 6 changes to the input screen 140 shown in FIG. 7.

As shown in FIG. 7, "IMPRESSION MATCH", rather than "SATURATION MATCH", is selected on the user control 150, and on the user control 155, the amount-of-ink limiting process is turned OFF rather than being turned ON. The operator may change as necessary the initial values of certain ones of the parameters, or may leave the initial values of the parameters unchanged.

The number and types of parameters are not limited to those illustrated, and other parameters may be set through other non-illustrated input screens. For example, in a case where the operator clicks on the icons of the icon group 146, thereby changing the rendered content of the input screen 140, the values of other parameters may be displayed and changed.

In step S6, the server 16 saves the finalized value data 64 that was set in step S5 in the storage device 28. The finalized value data 64 represent a collection of values (finalized values) of the parameters that have been finalized by the setting action of the operator.

In a case where the operator clicks on one of the buttons of the button group 144 (i.e., the "SAVE" button), the terminal controller 50 temporarily stores, as the finalized value data 64 in the terminal memory 58, the values of the parameters that are currently selected on the input screen 140. The working terminal 18 sends communication data including the finalized value data 64 through the terminal I/F 52 to the server 16. The server 16 receives the communication data through the LAN 26 and the communication I/F 82.

The controller 80 supplies the finalized value data 64 included in the received communication data through the connection I/F 84 to the storage device 28. Based on the present settings, the storage device 28 saves the finalized value data 64, thereby accumulating the finalized value data 64 in the finalized value DB 32.

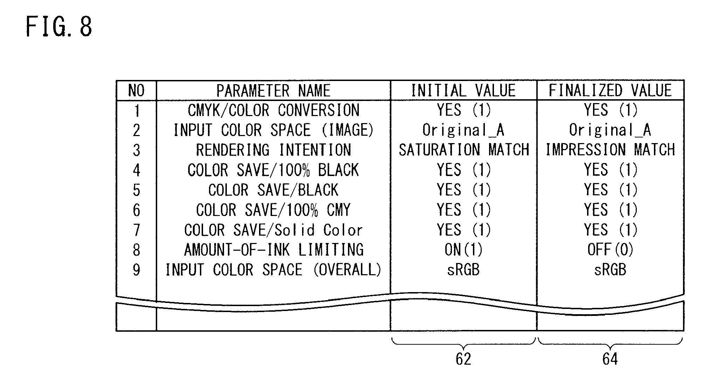

FIG. 8 shows by way of example initial values and finalized values of parameters. FIG. 8 represents a mapping table for the parameters, which can be set on the input screen 140 (FIGS. 6 and 7). The mapping table contains a list of identification numbers, a list of parameter names, a list of initial values (values of data templates 62), and a list of finalized values (values of finalized value data 64) .

In this manner, the parameter setting assisting system 38 brings to an end the operation sequence for generating a print job suitable for a print 22. Thereafter, the print production system 10 reads the finalized value data 64 that was stored in the storage device 28, and carries out the print job.

### [Operations (latter part) of Parameter Setting Assisting System 38]

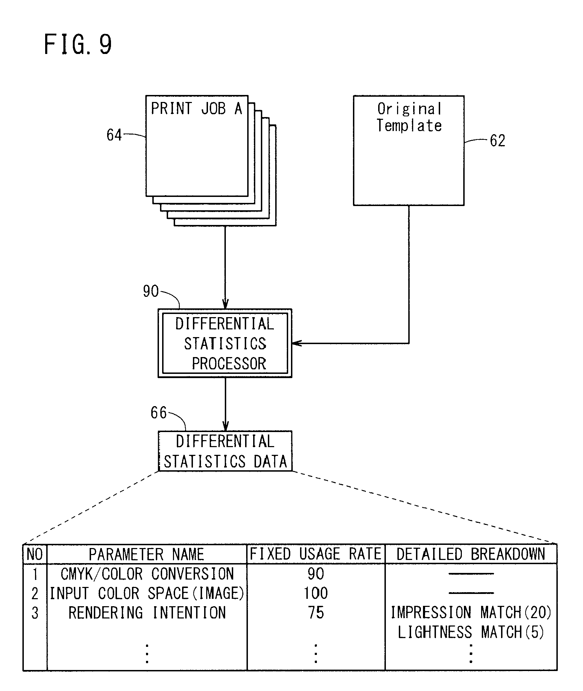

The parameter setting assisting system 38 provides a mode for assisting in setting parameters (setting assisting mode). Specific operational details of the setting assisting mode will be described below with reference to the flowchart shown in FIG. 4, together with FIGS. 9 through 11.

In a case where the terminal controller 50 judges in step S3 of FIG. 4 that the "HELP" button 128 (FIG. 5) has been clicked on, thereby turning ON the setting assisting mode (step S3: ON), then control proceeds to step S7, not to step S4. At this time, the working terminal 18 indicates the fact that the setting assisting mode has been turned ON to the server 16.

In step S7, the data acquirer 88 of the server 16 acquires a data template 62 and plural finalized value data 64, which are related to the template name "Original Template". The plural finalized value data 64 refer to a plurality of finalized value data 64, which have been finally set in the past, after the data template 62 was called up as initial values.

In step S8, the differential statistics processor 90 performs a prescribed statistical process based on the various data acquired in step S7. The prescribed statistical process performed by the differential statistics processor 90 will be described in specific detail below with reference to FIG. 9.

As shown in FIG. 9, the differential statistics processor 90 performs the statistical process on differential data between the finalized value data 64 and the data template 62, thereby producing differential statistics data 66. The statistical process refers to a calculation process based on a statistical approach.

As shown in FIG. 9, the differential statistics data 66 include fixed usage rates (unit: %) and detailed breakdowns thereof. A "fixed usage rate" represents the percentage of a parameter, which is set as is, without any changes from its initial value, and is determined as 100 x (the number of data whose finalized values are equal to initial values)/(the total number of all data). A "detailed breakdown" represents the percentage of each value, which is set in the case that a finalized value differs from an initial value. In the case shown in FIG. 9, in a case where the initial value of "RENDERING INTENTION" under the template name "Original Template" is "saturation match", the percentage of the parameter, which is used as is, is represented by 75%, and the percentages of the parameters that have been changed to "IMPRESSION MATCH" and "LIGHTNESS MATCH" are represented by 20% and 5%, respectively.

Apart from a statistical distribution including a histogram, the differential statistics data 66 may be represented by at least one statistical quantity from among an average value, a most frequent value, a central value, a maximum value, and a minimum value. The population, the number of parameters, and a combination, which are used in the statistical process, may be changed as desired.

In step S9, the parameter setting assisting system 38 performs a transmitting and receiving process on the differential statistics data 66. Prior to the transmitting and receiving process, the server 16 temporarily stores the differential statistics data 66 in the memory 86. Thereafter, the server 16 sends communication data including the differential statistics data 66 through the communication I/F 82 to the working terminal 18. The working terminal 18 receives the communication data through the LAN 26 and the terminal I/F 52, and thereafter, the terminal controller 50 temporarily stores the differential statistics data 66 included in the communication data in the terminal memory 58.

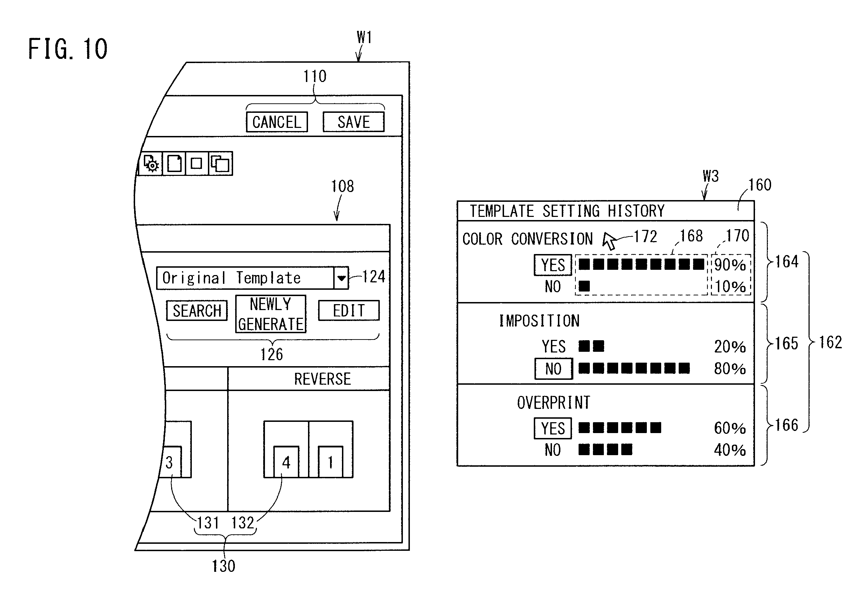

In step S10, the user interface 60 displays the results of the statistical process that was carried out in step S8. Prior to displaying the results, the result image generator 74 reads the differential statistics data 66 from the terminal memory 58, and generates result images 164 through 166 (FIG. 10) based on the differential statistics data 66. The screen generator 72 generates display data for a window W3 (including the result images 164 through 166), and then supplies the generated display data to the display unit 56. The display unit 56 newly displays the window W3, which includes the setting assisting screen 160 shown in FIG. 10.

As shown in FIG. 10, the window W3 is placed on the right side of the window W1. The setting assisting screen 160 has a result display field 162 for displaying the results of the statistical process. The result display field 162 includes a result image 164 concerning "COLOR CONVERSION", a result image 165 concerning "IMPOSITION", and a result image 166 concerning "OVERPRINT". Each of the result images 164 through 166 for the respective parameters includes a histogram 168 and a character string 170 for visually indicating a past usage rate thereof (unit: %).

Upon observing the result image 164, the operator recognizes that in a case where the template name "Original Template" is selected, the percentage at the time that the color conversion process is carried out is 90%, and the percentage at the time that the color conversion process is not carried out is 10%. Thus, using the statistical data in the past as a clue, the operator finds it easy to judge which value should be set in the print job that is currently being edited.

The result images 164 through 166 may also have a function to call the window W2 (the input screen 140 shown in FIGS. 6 and 7) in addition to the function to visually indicate the results of the statistical process. For example, in response to an action of the operator pointing to the result image 164, the user interface 60 may call up and display the user control 148 (window W2), for thereby changing the value of a parameter ("COLOR CONVERSION" in FIG. 10) to be processed by the statistical process. The operator may point to the result image 164 by clicking on the result image 164 while a cursor 172 is placed at a given position on the result image 164, for example.

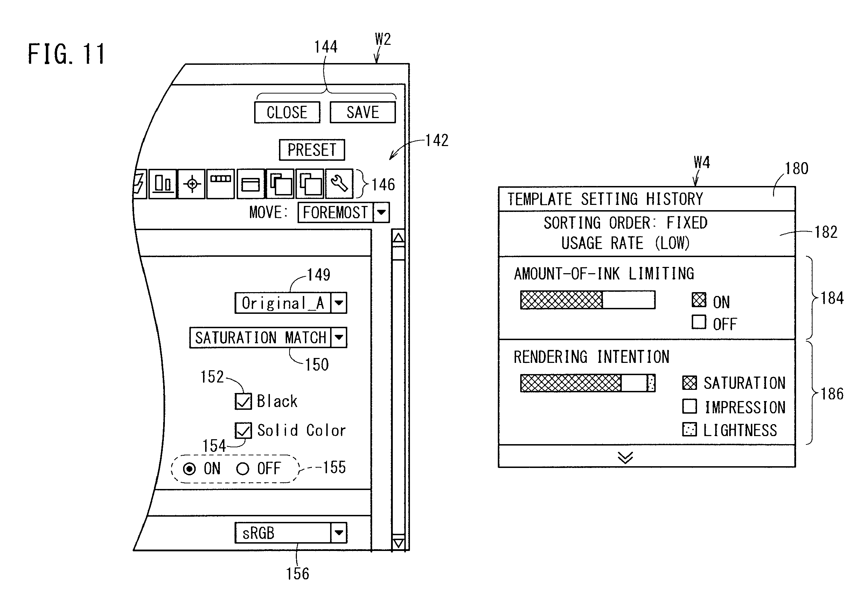

The user interface 60 may display the results of the statistical process in a pattern that differs from the window W3 shown in FIG. 10. For example, the screen generator 72 generates as the display data a window W4 (including the result images 184, 186), and then supplies the generated display data to the display unit 56. The display unit 56 displays the window W4, which includes the setting assisting screen 180 shown in FIG. 11.

As shown in FIG. 11, the window W4 is placed on the right side of the window W2. The setting assisting screen 180 includes a display field 182 for displaying a sort sequence of the parameters, and result images 184, 186 for indicating the results of the statistical process. Each of the result images 184, 186 for the respective parameters is an image represented in the form of a bar graph for visually indicating a past usage rate (unit: %).

Thus, the user interface 60 may display the result images 184, 186 simultaneously or together with the user controls 148 through 155 for changing the values of the parameters to be processed by the statistical process. The result images 184, 186, which are displayed in this manner, are convenient for the operator, because the operator is capable of changing the parameter values while observing the result images 184, 186.

The result image generator 74 may generate the display data for the result images 164 through 166 in the form of histograms, or may generate the display data for the result images 184, 186 in the form of bar graphs for the respective parameters, thereby making it possible for the operator to recognize with greater ease the setting history of each of the parameters.

The result image generator 74 may generate the display data for the result images 184, 186 so as to represent a plurality of parameters sorted in a descending or ascending order of frequencies at which the finalized values differ from the initial values. Therefore, the operator can easily recognize parameters that have a high (or a low) probability of changing.

### [Advantages of the First Embodiment]

The parameter setting assisting system 38 includes the template acquirer 68 for acquiring a data template 62 that represents a collection of initial values of parameters concerning printing, the user interface 60 for calling up the data template 62 and displaying the collection of initial values and enabling the values of the parameters to be varied, the differential statistics processor 90 for performing a statistical process on a plurality of differential data between a collection of finalized values of the parameters, which have been set a plurality of times in the past (finalized value data 64), and the collection of initial values, and the result image generator 74 for generating result images 164 through 166, 184, and 186 indicating the results of the statistical process. At the time that the user interface 60 calls up a new data template 62 and displays a collection of initial values, the user interface 60 simultaneously displays the result images 164 through 166, 184, and 186.

With the above arrangement, by observing the result images 164 through 166, 184, and 186, which represent a statistical quantity of the differences (changes) between the parameters, the operator can easily recognize the tendency of the parameters that have been set a plurality of times in the past. Therefore, the operator is presented with particularly useful information in the case that settings for the parameters are to be corrected based on the data template 62 that has been called up beforehand.

At the time that the user interface 60 simultaneously displays the result images 164 through 166, 184, and 186, the user interface 60 may display the result images 164 through 166, 184, and 186 not only at the same time, but also in such a manner that allows the operator to observe the result images 164 through 166, 184, and 186 essentially at one time. More specifically, the user interface 60 may display the result images 164 through 166, 184, and 186 in separate windows W2, W3, or in a single window, or alternatively, the user interface 60 may display the result images 164 through 166, 184, and 186 selectively in combination with respective tabs in a window. Further alternatively, the user interface 60 may display the result images 164 through 166, 184, and 186 alternately at given time intervals in a sequential display mode.

### <Second Embodiment>

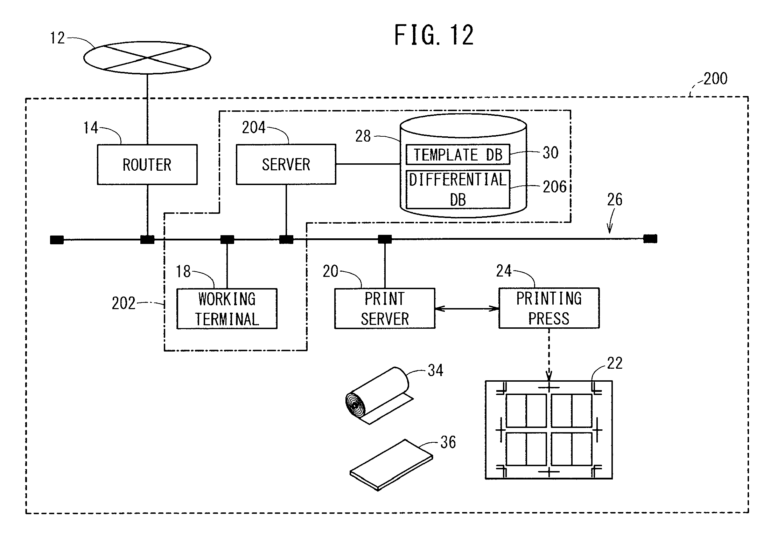

With reference to FIGS. 12 to 14, a parameter setting assisting system according to a second embodiment will be described below. Structures identical to those in the first embodiment are given identical reference numerals and explanations thereof will be omitted.

### [Entire structural diagram of print production system 200]

FIG. 12 shows in block form a print production system 200 incorporating a parameter setting assisting system 202 according to a second embodiment of the present invention. The print production system 200 essentially is of the same configuration as the print production system 10 (FIG. 1), but differs therefrom in relation to the parameter setting assisting system 202, which is a different system from the parameter setting assisting system 38 according to the first embodiment.

The parameter setting assisting system 202 includes, in addition to the working terminal 18 and the storage device 28, a server 204 having a different processing function from the server 16 (FIG. 1) according to the first embodiment. The storage device 28 includes, in addition to the template DB 30, a database 206 made up of differential data (hereinafter referred to as a "differential DB 206").

### [Electric Setup of Working Terminal 18]

The working terminal 18 shown in FIG. 12 is identical in configuration to the working terminal 18 according to the first embodiment (FIG. 2) and will not be described in detail below.

### [Electric Setup of Server 204]

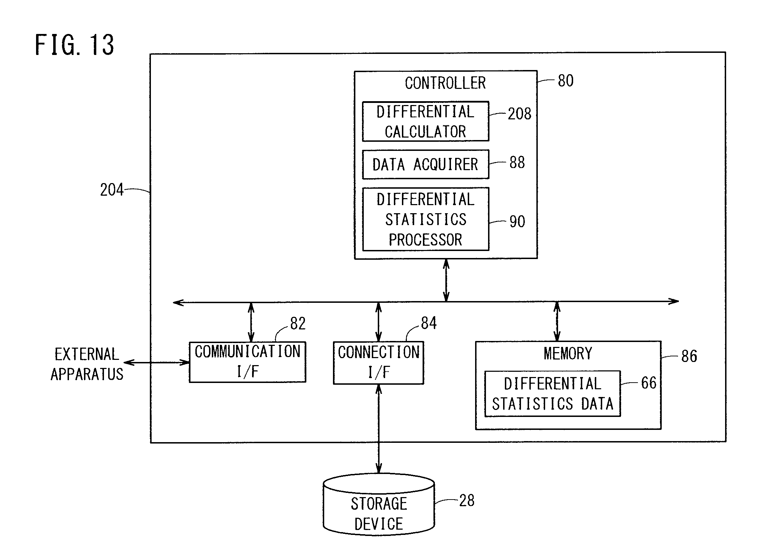

FIG. 13 shows in electric block form the server 204 shown in FIG. 12. The server 204 basically is identical in configuration to the server 16 according to the first embodiment (FIG. 3). However, the controller 80 shown in FIG. 13 carries out functions that include the data acquirer 88 and the differential statistics processor 90, and additionally, carries out a function as a differential calculator 208 for acquiring differential data by performing differential calculations between a data template 62 and the finalized value data 64.

### [Operations of Parameter Setting Assisting System 202]

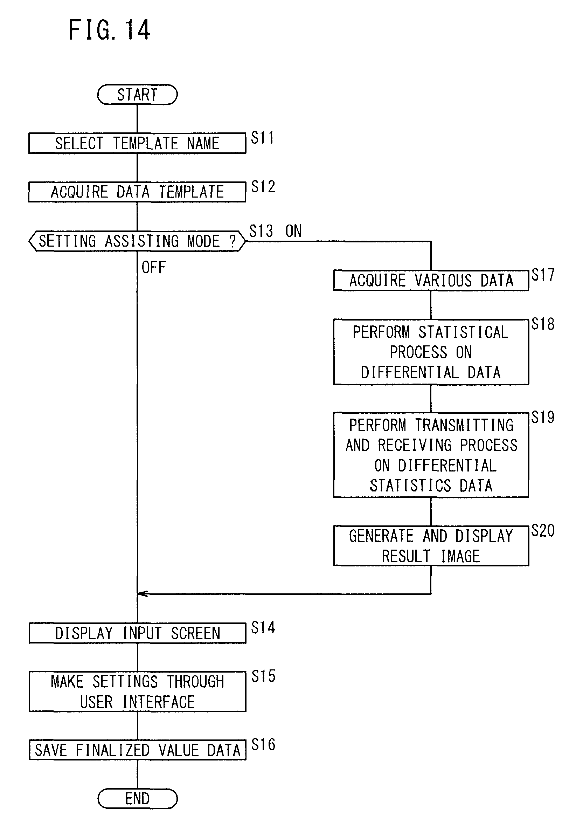

The parameter setting assisting system 202 according to the second embodiment is basically configured as described above. Operations of the working terminal 18 shown in FIG. 2 and the server 204 shown in FIG. 13 will be described in detail below primarily with reference to the flowchart shown in FIG. 14.

In step S11 of FIG. 14, the operator selects a template name to be called up through the user interface 60 (FIG. 2). In step S12, the working terminal 18 acquires a data template 62 (FIG. 2) that is related to the template name selected in step S11. Step S11 corresponds to step S1 of FIG. 4, whereas step S12 corresponds to step S2 of FIG. 4.

In step S13, the terminal controller 50 judges whether the "setting assisting mode" has been turned ON or OFF. In a case where the terminal controller 50 determines that the setting assisting mode is OFF (step S13: OFF), control proceeds to step S14.

In step S14, the user interface 60 calls up the data template 62 that was acquired in step S12, and displays a collection of initial values of parameters on the input screen 140 (FIG. 6). In step S15, the working terminal 18 sets the parameters through the user interface 60. Step S14 corresponds to step S4 of FIG. 4, whereas step S15 corresponds to step S5 of FIG. 4.

In step S16, the server 204 saves differential data in the storage device 28 with respect to the finalized value data 64 that was set in step S15. Prior to saving the differential data, the working terminal 18 temporarily stores the finalized value data 64 in the terminal memory 58. Thereafter, the working terminal 18 sends communication data, including the finalized value data 64, through the terminal I/F 52 to the server 204. The server 204 receives the communication data through the LAN 26 and the communication I/F 82.

The differential calculator 208 acquires differential data by performing differential calculations between the received finalized value data 64 and the data template 62. The controller 80 supplies the differential data, which was acquired by the differential calculator 208, through the connection I/F 84 to the storage device 28. The storage device 28 stores the finalized value data 64 based on the present settings, thereby accumulating the finalized value data 64 in the differential DB 206.

In a case where the terminal controller 50 determines in step S13 of FIG. 14 that the setting assisting mode is ON (step S13: ON), control proceeds to step S17.

In step S17, the data acquirer 88 of the server 204 acquires from the differential DB 206 a plurality of differential data, which are associated to the template name "Original Template". In step S18, the differential statistics processor 90 performs a prescribed statistical process based on the plural differential data acquired in step S17. In step S19, the parameter setting assisting system 202 performs a transmitting and receiving process on the differential statistics data 66. In step S20, the user interface 60 displays the results of the statistical process carried out in step S18.

### [Advantages of the Second Embodiment]

The parameter setting assisting system 202, which includes the differential DB 206 instead of the finalized value DB 32, offers essentially the same advantages as those of the parameter setting assisting system 38 according to the first embodiment. In particular, since only differential data are stored and managed in the differential DB 206, the amount of data to be handled is significantly reduced.

## Claims

1. A parameter setting assisting system (38, 202) comprising:
a template acquirer (68) configured to acquire a data template (62) that represents a collection of initial values of parameters concerning printing;
a user interface (60) configured to call up the data template (62) acquired by the template acquirer (68) and display the collection of initial values, and to vary the values of the parameters;
a differential statistics processor (90) configured to perform a statistical process on a plurality of differential data between a collection of finalized values of the parameters, which have been set a plurality of times in past through the user interface (60), and the collection of initial values represented by the data template (62); and
a result image generator (74) configured to generate a result image (164 through 166, 184, and 186) indicating the results of the statistical process performed by the differential statistics processor (90),
wherein, in a case where a new data template (62) is called up and a collection of initial values of parameters therefor is displayed, the user interface (60) simultaneously displays the result image (164 through 166, 184, and 186) generated by the result image generator (74).

2. The parameter setting assisting system (38, 202) according to claim 1, wherein, in response to an action of pointing to the result image (164 through 166), the user interface (60) calls up and displays user controls (148 through 156) for changing the values of the parameters that are processed by the statistical process.

3. The parameter setting assisting system (38, 202) according to claim 1, wherein the user interface (60) displays the result image (164 through 166, 184, and 186) simultaneously with user controls (148 through 156) for changing the values of the parameters that are processed by the statistical process.

4. The parameter setting assisting system (38, 202) according to any one of claims 1 to 3, wherein the result image generator (74) generates the result image (164 through 166, 184, and 186), which is represented by a histogram or a bar graph, for each of the parameters.

5. The parameter setting assisting system (38, 202) according to any one of claims 1 to 4, wherein the result image generator (74) generates the result image (184, 186), which is represented by a plurality of parameters sorted in a descending or an ascending order of frequencies, at which the finalized values differ from the initial values.

6. A parameter setting assisting method to be carried out by a system (38, 202) having a user interface (60) for varying values of parameters concerning printing, comprising the steps of:
acquiring a data template (62) that represents a collection of initial values of the parameters;
calling up the acquired data template (62) and displaying the collection of initial values on the user interface (60);
performing a statistical process on a plurality of differential data between a collection of finalized values of the parameters, which have been set a plurality of times in past, and the collection of initial values represented by the data template (62); and
generating a result image (164 through 166, 184, and 186) indicating the results of the statistical process,
wherein, in a case where a new data template (62) is called up and a collection of initial values of parameters therefor is displayed, the step of displaying the collection of initial values further comprises simultaneously displaying the generated result image (164 through 166, 184, and 186).

7. A program to be executed by a system (38, 202) having a user interface (60) for varying values of parameters concerning printing, the program causing the system (38, 202) to carry out the steps of:
acquiring a data template (62) that represents a collection of initial values of the parameters;
calling up the acquired data template (62) and displaying the collection of initial values on the user interface (60);
performing a statistical process on a plurality of differential data between a collection of finalized values of the parameters, which have been set a plurality of times in past, and the collection of initial values represented by the data template (62); and
generating a result image (164 through 166, 184, and 186) indicating the results of the statistical process,
wherein, in a case where a new data template (62) is called up and a collection of initial values of parameters therefor is displayed, the step of displaying the collection of initial values further comprises simultaneously displaying the generated result image (164 through 166, 184, and 186).
